(19) Europäisches Patentamt
European Patent Office
Office européen des brevets

(11) **EP 2 281 336 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **09745618.0**

(22) Anmeldetag: **24.03.2009**

(51) Int Cl.:
*H02P 23/00* *(2006.01)*    *B60L 3/00* *(2006.01)*
*B60L 3/04* *(2006.01)*

(86) Internationale Anmeldenummer:
**PCT/EP2009/053407**

(87) Internationale Veröffentlichungsnummer:
**WO 2009/138285 (19.11.2009 Gazette 2009/47)**

(54) **VERFAHREN ZUM ÜBERPRÜFEN EINES ZUSTANDS EINES ELEKTROMOTORS**

METHOD FOR EXAMINING THE STATE OF AN ELECTRIC MOTOR

PROCÉDÉ DE VÉRIFICATION DE L'ÉTAT D'UN MOTEUR ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.05.2008 DE 102008001714**

(43) Veröffentlichungstag der Anmeldung:
**09.02.2011 Patentblatt 2011/06**

(73) Patentinhaber: **Robert Bosch GmbH**
**70442 Stuttgart (DE)**

(72) Erfinder:
• **DOERR, Bernd**
**74731 Wallduern (DE)**
• **SCHLESER, Roland**
**74245 Loewenstein (DE)**
• **NIEMANN, Holger**
**71640 Ludwigsburg (DE)**
• **DAMM, Daniel**
**71638 Ludwigsburg (DE)**
• **HEYL, Andreas**
**71640 Ludwigsburg (DE)**

(56) Entgegenhaltungen:
**JP-A- 2000 166 014    JP-A- 2004 215 328**
**US-A- 5 444 340    US-A- 5 592 355**
**US-A- 5 689 170**

**Beschreibung**

Technisches Gebiet

Die folgende Erfindung betrifft ein Verfahren zum Überprüfen eines Zustands eines Elektromotors, insbesondere eines Elektromotors eines Hybridfahrzeugs.

Stand der Technik

Zur Überprüfung eines Ist-Zustandes eines Elektromotors wie beispielsweise eines Drehmomentes auf Plausibilität bei Vorliegen bestimmter Systemparameter kann der Ist-Zustand beispielsweise mit einem zu erwartenden Soll-Zustand verglichen werden. Unterscheidet sich ein durch den Elektromotor eines Hybridfahrzeugs erzeugtes Ist-Drehmoment von einem gewünschten Soll-Moment, das beispielsweise anhand einer Gaspedalstellung ermittelbar ist, so ist von einer Fehlfunktion des Systems auszugehen, die zu einer ungewollten Fahrzeugbeschleunigung führen kann.

Die DE 10 2006 004 280 A1 offenbart ein Verfahren zur kontinuierlichen Momentenüberwachung eines Hybridantriebs, bei dem ein zulässiges Gesamtmoment mit einer Summe aus einem Ist-Moment eines Elektroantriebs und einem Ist-Moment einer Brennkraftmaschine verglichen wird.

Aus der US 5,444,340 A ist ein Verfahren zum Steuern eines Motors bekannt. Bei dem Verfahren dient ein Kommutatorsensorsignal der Positionserfassung des Rotors des Motors. Eine gewünschte Soll-Geschwindigkeit des Motors wird mittels einer wellenförmigen Kennlinie des Motors verknüpft. Durch einen Schaltkreis wird das dadurch erzeugte Signal mit dem Kommutatorsensorsignal verglichen und der Motor gestoppt, sofern eine unerwünschte Abweichung der Signale voneinander vorliegt. Aus der US 5,592,355 A, der JP 2004-215328 A und der JP 2000-166014 A sind weitere Verfahren zum Überprüfen eines Motors bekannt.

Die Plausibilisierung eines Drehmomentes eines Elektromotors wird üblicherweise auf der Basis einer aus der Hochspannungsbatterie entnommenen Leistung P und einer Drehzahl n anhand der Formel

$$T = P/n^{*}\eta$$

durchgeführt, wobei $\eta$ einen Wirkungsgrad der Umsetzung der elektrischen Energie in mechanische Energie von der Hochspannungsbatterie zum Elektromotor bezeichnet. Für die elektrische Leistung gilt der Zusammenhang $P = U^{*}I$, wobei U die Zwischenkreisspannung bzw. die Batteriespannung ist und wobei I der der Batterie entnommenen Gleichstrom ist.

Aufgrund der Quotientenbildung zur Berechnung des Drehmomentes T führen beispielsweise absolute bzw. systematische Messfehler bei niedrigen Drehzahlen zu einer starken Aufweitung eines Fehlerfensters, so dass bei niedrigen Drehzahlen jedes auftretende Moment als zuverlässig gewertet werden muss. Daraus ergibt sich das Problem, dass das Drehmoment nicht mehr überwacht und somit nicht mehr auf seine Plausibilität hin überprüft werden kann.

Offenbarung der Erfindung

Die Erfindung basiert auf der Erkenntnis, dass ein Zustand eines Elektromotors, beispielsweise ein Drehmoment, anhand einer Kennlinie, die typisch für den Elektromotor ist und beispielsweise empirisch durch Messungen bestimmt werden kann, überprüfbar ist. Die Kennlinie ermöglicht es, unterschiedliche physikalische Kenngrößen zur Zustandsüberwachung einzusetzen, wodurch eine Kenngrößen-Redundanz erzielt wird, die eine sicherere Zustandsüberwachung insbesondere bei niedrigen Drehzahlen, die beispielsweise 10%, 15%, 20% oder 25% der maximal erreichbaren Drehzahl betragen, ermöglicht. Ferner kann dadurch insbesondere im niedrigeren Drehzahlbereich eine sichere Zustandsplausibilisierung durchgeführt werden, weil beispielsweise zur Überprüfung eines Drehmomentes des Elektromotors dessen aufgenommene elektrische Leistung oder ein für das Drehmoment ursächlicher Querstrom, der beispielsweise die in dem Elektromotor angeordneten Spulen durchfließt, erfasst und mit der Kennlinie verknüpft werden kann.

Durch die Verwendung der Kennlinie kann ferner insbesondere im niedrigen Drehzahlbereich bis beispielsweise 1.000 U/min eine genauere Zustandplausibilisierung durchgeführt werden, ohne dass die vorgenannten Ungenauigkeiten in niedrigen Drehzahlbereichen sich negativ auswirken.

Die Erfindung betrifft ein Verfahren zum Überprüfen eines Zustands eines Elektromotors, mit Erfassen einer gemessenen ersten physikalischen Größe des Elektromotors durch eine Messung, wobei die erste physikalische Größe auf einen Ist-Zustand des Elektromotors hinweist, Bereitstellen einer zweiten physikalischen Größe des Elektromotors, die auf einen Soll-Zustand des Elektromotors hinweist, Ermitteln einer zu erwartenden ersten physikalischen Größe auf der Basis der zweiten physikalischen Größe und einer Kennlinie des Elektromotors, die die zu erwartende erste physikalische Größe mit der zweiten physikalischen Größe verknüpft, und Überprüfen des Zustandes anhand eines Vergleichs zwischen der gemessenen ersten physikalischen Größe und der zu erwartenden ersten physikalischen Größe.

Erfindungsgemäß ist die gemessene erste physikalische Größe eine elektrische Leistung, insbesondere eine durch den Elektromotor aufgenommene oder durch eine elektrische Batterie bereitgestellte elektrische Leistung, wobei die zweite physikalische Größe ein Drehmoment des Elektromotors oder ein Querstrom, der für ein Drehmoment des Elektromotors ursächlich ist, oder eine von dem Drehmoment oder dem Querstrom abhängige Größe ist, und wobei die zu erwartende erste physikalische Größe die bei Vorliegen der zweiten physikalischen Größe zu erwartende elektrische Leistung ist.

Gemäß einem Ausführungsbeispiel sind die erste physikalische Größe und die zweite physikalische Größe unterschiedliche physikalische Größen und weisen beispielsweise unterschiedliche Einheiten auf.

Gemäß einem Ausführungsbeispiel umfasst die Kennlinie gemessene oder empirisch bestimmte oder repräsentative Kennlinienwerte.

Gemäß einem Ausführungsbeispiel ist die Kennlinie ein dreidimensionales Kennlinienfeld, das die zu erwartende erste physikalische Größe, insbesondere eine Leistung, mit der zweiten physikalischen Größe, insbesondere einem Drehmoment des Elektromotors oder einem Querstrom, der für ein Drehmoment des Elektromotors ursächlich ist, oder einer von dem Drehmoment oder dem Querstrom abhängigen Größe, und einer dritten physikalische Größe, insbesondere einer Motordrehzahl, verknüpft.

Gemäß einem Ausführungsbeispiel wird in dem Schritt des Überprüfens die gemessene erste physikalische Größe mit der zu erwartenden ersten physikalischen Größe verglichen.

Gemäß einem Ausführungsbeispiel wird der Elektromotor abgeschaltet, falls ein Unterschied zwischen der gemessenen ersten physikalischen Größe und der zu erwartenden ersten physikalischen Größe einen vorgegebenen Schwellwert überschreitet.

Gemäß einem Ausführungsbeispiel wird der Zustand des Elektromotors auf der Basis der Kennlinie bis zu einer vorgebbaren Drehzahl des Elektromotors überprüft, wobei der Zustand des Elektromotors oberhalb der vorgebbaren Drehzahl auf der Basis eines Vergleichs der gemessenen ersten physikalischen Größe und der zu erwartenden ersten physikalischen Größe, insbesondere auf der Basis eines Vergleichs zwischen einem gemessenem Ist-Drehmoment und einem Soll-Drehmoment, das in Abhängigkeit von einer aufgenommenen oder abgegebenen elektrischen Leistung oder einer Drehzahl des Elektromotors berechnet wird, durchgeführt wird.

Gemäß einem Ausführungsbeispiel werden ferner ein Drehmoment des Elektromotors und/oder eine Drehzahl des Elektromotors in Abhängigkeit des Vergleichs zwischen der gemessenen ersten physikalischen Größe und der zu erwartenden ersten physikalischen Größe insbesondere adaptiv eingestellt.

Die Erfindung betrifft ferner eine programmtechnisch eingerichtete Vorrichtung, die ausgebildet ist, ein Computer-Programm zum Ausführen des Verfahrens zum Überprüfen eines Zustands eines Elektromotors auszuführen.

## Zeichnungen

Weitere Ausführungsbeispiele werden Bezug nehmend auf die beiliegenden Zeichnungen näher erläutert. Es zeigen:

Fig. 1 Verfahrensschritte zum Überprüfen eines Zustands eines Elektromotors;

Fig. 2 einen drehzahlabhängigen Fehler bei einer Bestimmung eines Drehmomentes;

Fig. 3 ein drehzahlabhängiges Zustandsüberwachungskonzept;

Fig. 4 einen Zusammenhang zwischen einem Querstrom und einem Drehmoment;

Fig. 5 ein Kennlinienfeld; und

Fig. 6 ein Blockdiagramm einer Vorrichtung zum Überprüfen eines Zustands eines Elektromotors.

## Beschreibung der Ausführungsformen

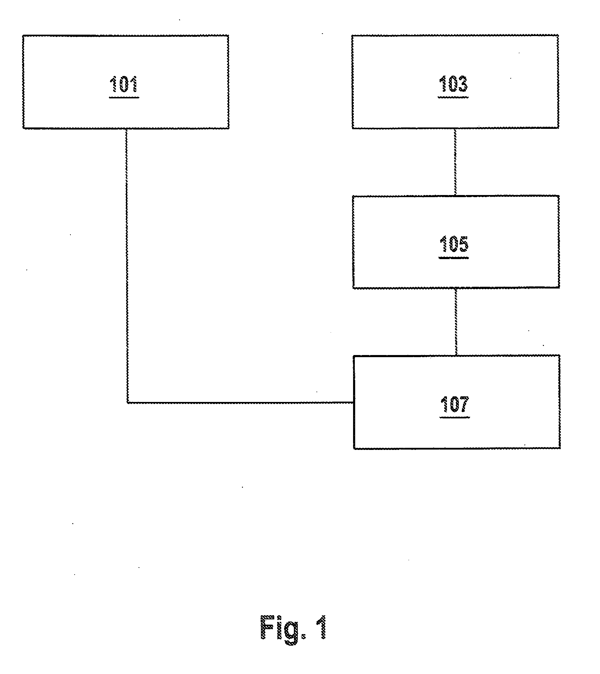

Fig. 1 zeigt ein Diagramm eines Verfahrens zum Überprüfen eines Zustands eines Elektromotors, bei dem im Schritt 101 eine erste physikalische Größe des Elektromotors, beispielsweise eine elektrische Leistung, die beispielsweise durch eine elektrische Hochspannungsbatterie bereitgestellt oder durch den Elektromotor aufgenommen wird, mittels einer Messung erfasst wird. Die erste physikalische Größe weist auf einen Ist-Zustand des Elektromotors hin. Im Schritt 103 wird eine zweite physikalische Größe des Elektromotors, beispielsweise ein Drehmoment oder ein Querstrom, der für das Drehmoment ursächlich ist oder eine von dem Drehmoment oder dem Querstrom abhängige Größe, bereitgestellt. Die zweite physikalische Größe weist auf einen Soll-Zustand des Elektromotors hin. Das Soll-Drehmoment ergibt sich beispielsweise aus einer Gaspedalstellung, wobei gegebenenfalls Drehmomentverluste berücksichtigt werden können. Der Soll-Zustand des Elektromotors entspricht somit einem Zustand des Elektromotors, der unter Berücksichtigung von beispielsweise unterschiedlichen Systemparametern wie beispielsweise die vorgenannte Gaspedalstellung zu erwarten ist. Dabei können die Schritte 101 und 103 gleichzeitig oder zeitversetzt erfolgen.

Im Schritt 105 wird eine zu erwartende erste physikalische Größe auf der Basis der zweiten physikalischen Größe und einer Kennlinie des Elektromotors, die die zu erwartende erste physikalische Größe mit der zweiten physikalischen Größe verknüpft, ermittelt. Die zu erwartende erste physikalische Größe, beispielsweise das unter Berücksichtigung der Systemparameter zu erwartende Drehmoment oder die zu erwartende elektrische Leistung, betrifft bevorzugt dieselbe physikalische Gegebenheit des Elektromotors wie die gemessene erste physikalische Größe.

Im Schritt 107 wird anhand eines Vergleichs zwischen der gemessenen ersten physikalischen Größe und der zu erwartenden ersten physikalischen Größe überprüft, ob der Ist-Zustand des Elektromotors dem Soll-Zustand des Elektromotors entspricht. Die Überprüfung im Schritt 107 führt insbesondere zu einer Feststellung, ob der Ist-Zustand plausibel oder nicht plausibel ist. Ist der Ist-Zustand plausibel, so wird von einer fehlerfreien Funktion des Systems ausgegangen. Unterscheidet sich der Ist-Zustand des Elektromotors signifikant von dem Soll-Zustand des Elektromotors, so wird von einem Systemfehler ausgegangen, wobei der Elektromotor beispielsweise abgeschaltet werden kann. Ein Unterschied zwischen dem Ist-Zustand und dem Soll-Zustand ist dann signifikant, wenn er einen vorgebbaren Schwellwert, beispielsweise 5% oder 10% des Soll-Zustands, überschreitet oder unterschreitet.

Das Verfahren zum Überprüfen des Zustandes des Elektromotors wird beispielsweise eingesetzt, um den Ist-Zustand des Elektromotors zu plausibilisieren. Hierbei kann beispielsweise anstelle des Drehmoments die elektrische Leistung, die durch den Elektromotor aufgenommen oder die durch die Hochspannungsbatterie bereitgestellt wird, auf die Plausibilität hin überprüft werden. Die Plausibilisierung kann beispielsweise durch eine Funktionssoftware auch für niedrige und sehr niedrige Drehzahlen erfolgen, was zu einer deutlichen Verbesserung der Fahrzeugsicherheit führt.

Wie vorstehend beschrieben kann das Drehmoment für niedrige Drehzahlen aus der Beziehung $T = P/n*\eta$ nur mit einem großen Messfehler bestimmt werden, der beispielsweise auf die absolute Messabweichung zurückgeführt werden kann. Die aus der Hochspannungsbatterie bezogene elektrische Leistung $P = U*I$ hingegen kann drehzahlunabhängig und daher im niedrigen Drehzahlbereich bis beispielsweise etwa 1.000 U/min genau innerhalb eines Genauigkeitsbereichs bestimmt werden. Insbesondere kann die elektrische Leistung auch dann bestimmt werden, wenn das Fahrzeug sich im Stillstand befindet. Wird beispielsweise ungewollt der Elektromotor mit einer Leistung oberhalb einer einstellbaren Schwelle beaufschlagt, so kann eine Fehlreaktion eingeleitet werden, durch die der Elektromotor beispielsweise abgeschaltet wird. Dies ist auch dann möglich, wenn beispielsweise das anliegende Drehmoment nicht präzise genug bestimmt werden kann, um eine Drehmomentabweichung zu erfassen.

Wird eine Leistung unterhalb einer Schwelle eingespeist, so kann die Beschleunigung beispielsweise mit

$$a = F/m = T/r/m = P/(n*\eta*r*m)$$

abgeschätzt werden, wobei mit F eine Kraft, mit m ein Fahrzeuggewicht und mit r ein Radius bezeichnet sind. Je höher die bereits erreichte Geschwindigkeit, desto mehr Leistung ist erforderlich, um beispielsweise eine signifikante Beschleunigung zu erreichen. Gleichzeitig steigt mit der Drehzahl auch die Genauigkeit des Momentenvergleichs anhand der vorgenannten Formel, weil der sich im niedrigeren Drehzahlbereich stark auswirkende Messfehler sich im höheren Drehzahlbereich weniger auswirkt. Wird die Leistung hingegen oberhalb der Schwelle eingespeist, so erlaubt deren Plausibilisierung eine sofortige Fehlerreaktion, die sogar dann möglich ist, wenn ein Triebstrang des Hybridfahrzeugs oder das Hybridfahrzeug selbst sich nicht oder nicht nennenswert bewegt haben. Somit erlaubt eine drehzahlabhängige Kombination von Momenten- und Leistungsüberwachung zur Zustandsüberwachung eine signifikante Erhöhung der Überwachungsgenauigkeit.

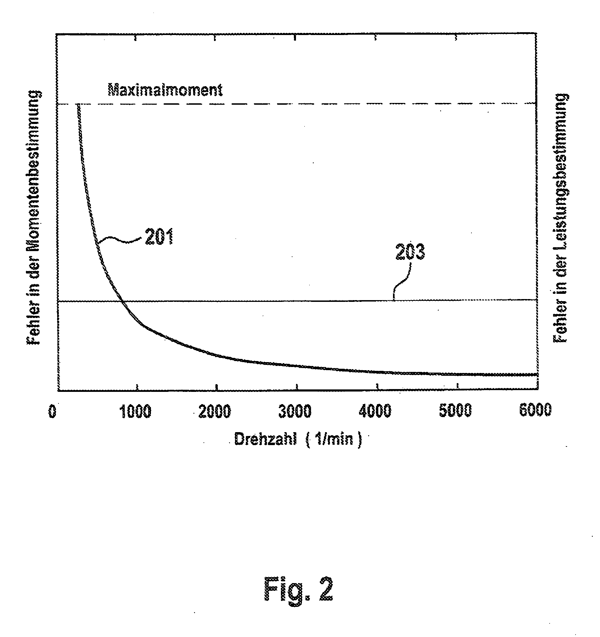

Fig. 2 zeigt einen Verlauf 201 eines Fehlers in der Momentenbestimmung, der bezogen beispielsweise auf ein Maximalmoment beispielsweise mit dem Kehrwert der der steigenden Drehzahl abfällt. Ferner ist mit dem Verlauf 203 ein Fehler in der Leistungsbestimmung dargestellt, der drehzahlunabhängig ist. Wie in Fig. 2 dargestellt schneiden sich die Verläufe 201 und 203 bei einer Drehzahl von etwa 1.000 U/min, sodass der Zustand des Elektromotors bis zu dieser Drehzahl bevorzugt auf der Basis der elektrischen Leistung und ab dieser Drehzahl bevorzugt auf der Basis des Drehmomentes erfasst werden kann.

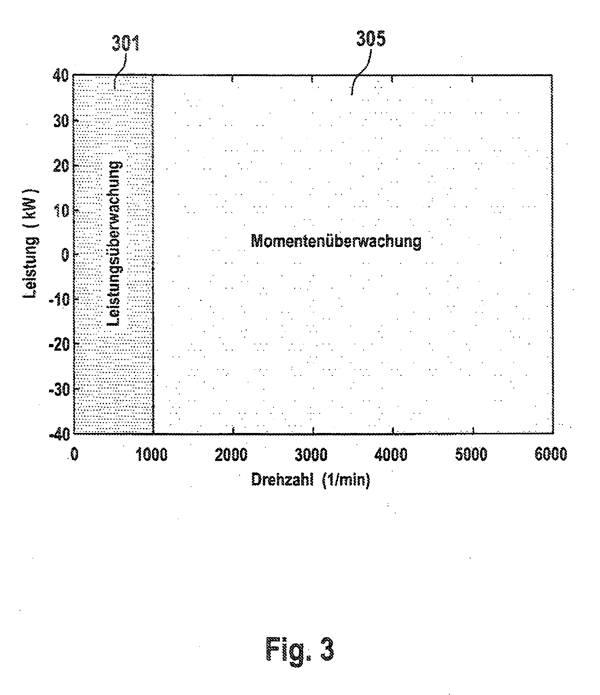

Fig. 3 verdeutlicht eine mögliche drehzahlabhängige Zustandsüberwachung, die bis zu einer vorbestimmten ersten Umdrehungszahl, beispielsweise bis zu 1.000 U/min, im Drehzahlbereich 301 auf der Basis der Leistungsüberwachung durchgeführt werden kann. Oberhalb von 1.000 U/min kann die Zustandsüberwachung beispielsweise auf der Basis der Momentenüberwachung durchgeführt werden, was durch den Drehzahlbereich 305 verdeutlicht ist. Darüber hinaus kann eine drehzahlabhängige Bewertung der maximal zulässigen Momentenabweichung durchgeführt werden, wobei Momentenfehler entdeckt werden können, nachdem sich das Fahrzeug bereits in Bewegung gesetzt hat und eine endliche Drehzahl erreicht hat, die einen Momentenvergleich ermöglicht. Die Momentenüberwachung im Drehzahlbereich 305 kann beispielsweise auf der Basis der vorstehend genannten Formel durchgeführt werden, da sich bei höheren Drehzahlen oberhalb von beispielsweise 1.000 U/min der vorstehend genannte Erfassungsfehler nicht so stark auswirkt, wie es im niedrigeren Drehzahlbereich der Fall ist.

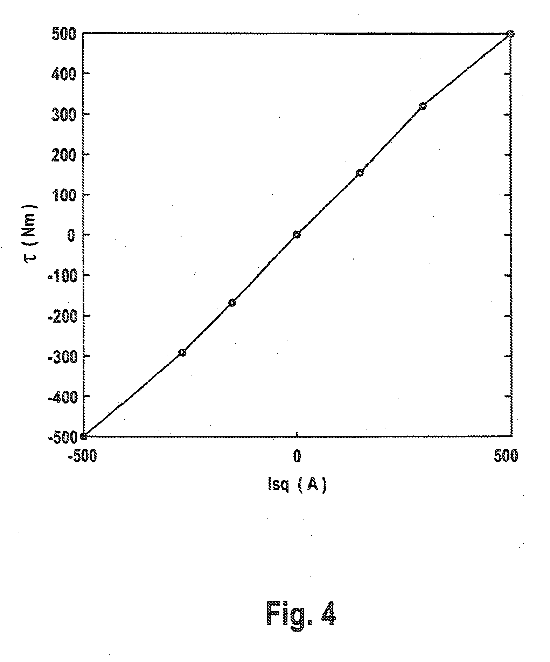

Gemäß einem Ausführungsbeispiel kann zur Überwachung bzw. zur Plausibilisierung eines Drehmomentes eines Elektromotors ein linearer Zusammenhang zwischen einem Querstrom Isq und einem Moment $\tau$, wie in Fig. 4 dargestellt, herangezogen werden, wobei der Querstrom beispielsweise über die elektrische Leistung plausibilisiert werden kann. Ferner kann das Drehmoment aus einem beispielsweise nicht abgesicherten oder nicht notwendigerweise redundant erfassten Querstrom bestimmt werden. Der Querstrom ist derjenige Strom, der zur Erzeugung des für das Drehmoment ursächlichen magnetischen Feldes aufgewendet wird. Der Querstrom kann insbesondere als eine gemessene erste physikalische Größe durch eine Messung gewonnen werden, die einen Ist-Zustand des Elektromotors charakterisiert. Gemäß einer weiteren Ausführungsform kann der Querstrom jedoch eine zweite physikalische Größe des Elektromotors darstellen, die auf einen Soll-Zustand des Elektromotors, insbesondere auf ein Soll-Drehmoment des Elektromotors, hinweist. Beispielsweise kann das Drehmoment ferner aus einem beispielsweise nicht abgesicherten, d.h. nicht notwendigerweise redundant erfassten, Querstrom bestimmt werden. Die Absicherung erfolgt, indem der mit dem Querstrom und mit der Drehzahl zusammenhängende Wert der elektrischen Leistung aus einer Kennlinie oder aus einem Kennfeld ausgelesen und mit aus einer Messung der Gleichstromgrößen bestimmten elektrischen Leistung verglichen wird. Dabei führt ein fehlerhaft gemessener Querstrom, was gleichbedeutend mit einem fehlerhaft bestimmten Ist-Moment ist, zu einer Leistung, die nicht plausibel ist, wodurch die fehlerhafte Messung erkannt werden kann.

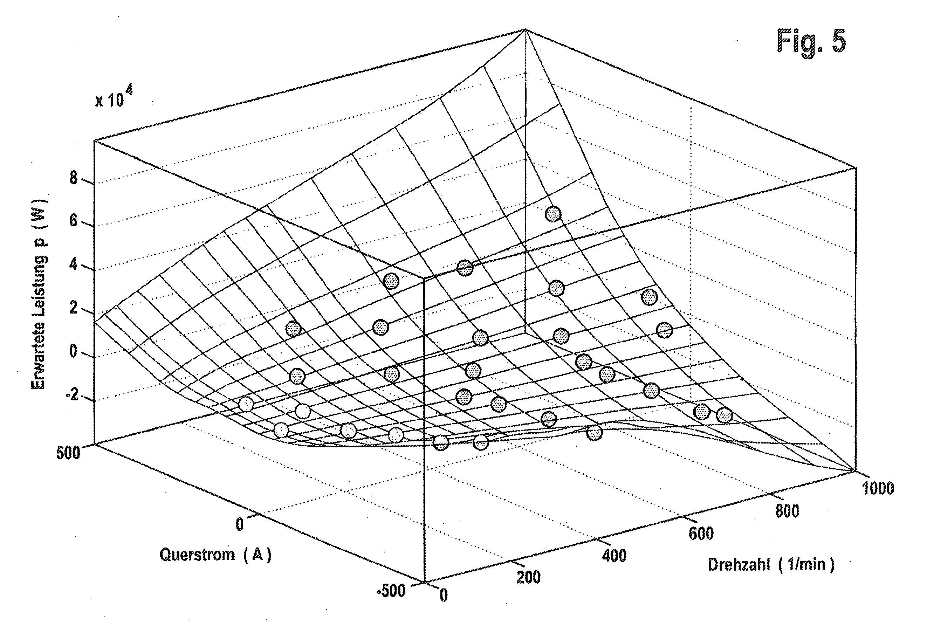

Fig. 5 zeigt beispielhaft ein Kennlinienfeld, in dem eine erwartete Leistung P, eine Amplitude eines Querstroms A sowie eine Drehzahl miteinander verknüpft sind. Das Kennlinienfeld kann beispielsweise empirisch durch Messungen bestimmt und beispielsweise in einem Speicher oder in einer Tabelle gespeichert werden. Die zu erwartende Leistung entspricht der vorstehend genannten zu erwartenden ersten physikalischen Größe, die anhand des Kennlinienfeldes ermittelt werden kann. Die erwartete Leistung kann zur Plausibilisierung des Fahrzeugzustandes beispielsweise mit einer gemessenen Leistung verglichen werden, um festzustellen, inwieweit sich die gemessene von der erwarteten Leistung unterscheidet. Beispielsweise für einen elektrischen Antrieb eines Hybridfahrzeugs mit einem hydrodynamischen Wandler kann die vorstehend beschriebene Zustandsüberwachung auf der Basis der Kennlinie beispielsweise in einem Drehzahlbereich von 100 U/min bis 1.000 U/min erfolgen, wobei das Moment über den Querstrom plausibilisiert wird.

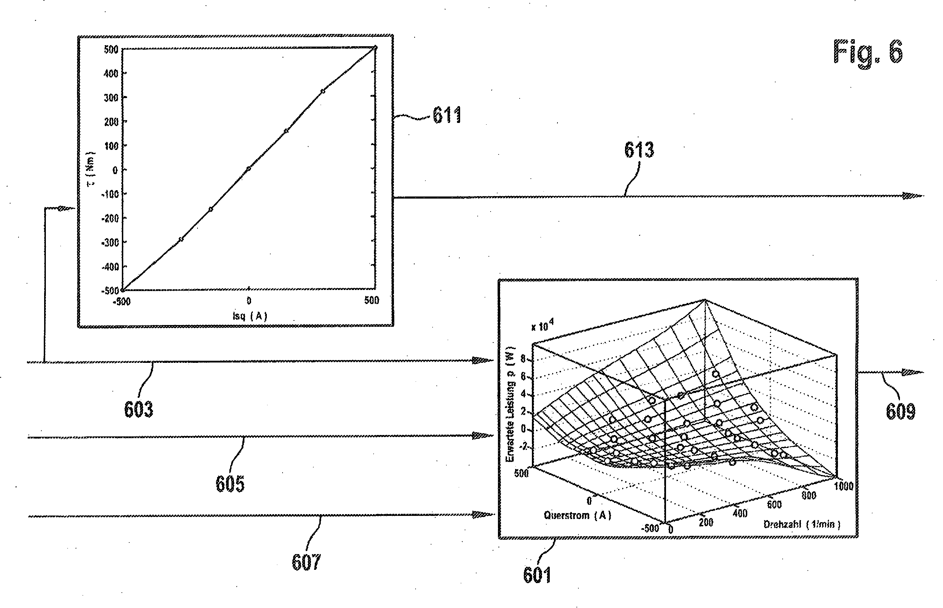

Fig. 6 zeigt ein Blockdiagramm einer Vorrichtung zur Momentenerfassung auf der Basis eines Querstroms. Dabei wird ausgenutzt, dass ein fehlerhaftes Moment mit einem fehlerhaften Querstrom verbunden ist und dass ein fehlerhafter Querstrom mit einer fehlerhaften elektrischen Leistung verbunden ist. Die Plausibilisierung des Zustandes, beispielsweise des Momentes des Elektromotors, erfolgt beispielsweise über eine gemessene Gleichstrom-Leistung. Dabei werden einem Prozessor 601 beispielsweise ein Querstrom über eine Leitung 603, eine elektrische Leistung $P_{elektrisch} = U_{DC} * I_{DC}$, wobei $U_{DC}$ eine Gleichspannung der Hochspannungsbatterie und $I_{DC}$ einen Gleichstrom bezeichnen, über eine Leitung 605 und eine Drehzahl über eine Leitung 607 zugeführt. Der Prozessor 601 verknüpft diese Größen mit einem Kennlinienfeld, das beispielsweise dem Kennlinienfeld aus Fig. 5 entsprechen kann, und ermittelt, ob die gemessene elektrische Leistung der zu erwartenden elektrischen Leistung entspricht. Unterscheidet sich die aus dem Kennlinienfeld ermittelte erwartete Leistung von der gemessenen Leistung um einen Differenzbetrag, der beispielsweise einen vorgegebenen Schwellwert überschreitet, so kann der Prozessor über einen Ausgang 609 ein Fehlersignal ausgeben, das auf diesen Unterschied hinweist. Auf der Basis des Fehlersignals kann beispielsweise bei einem signifikanten Unterschied der Elektromotor abgeschaltet werden, um beispielsweise eine ungewollte Beschleunigung zu verhindern.

Optional kann der Querstrom einem weiteren Prozessor 611 zugeführt werden, der beispielsweise auf der Basis der in Fig. 4 dargestellten Kennlinie das Ist-Moment ermittelt und es über einen Ausgang 613 ausgibt.

Der Prozessor 601 und der weitere Prozessor 611 können separate Berechnungselemente sein, die jeweils einen Speicher umfassen, in dem die Kennlinien- bzw. Kennfelddaten abgelegt sind. Gemäß einem weiteren Ausführungsbeispiel sind der Prozessor 601 und der weitere Prozessor 611 in eine programmtechnisch eingerichtete Vorrichtung implementiert, die ausgebildet ist, ein Computerprogramm zum Ausführen des Verfahrens zum Überprüfen eines Zustandes des Elektromotors auszuführen.

**Patentansprüche**

1. Verfahren zum Überprüfen eines Zustands eines Elektromotors, mit:

    Erfassen (101) einer gemessenen ersten physikalischen Größe des Elektromotors durch eine Messung, wobei die erste physikalische Größe auf einen Ist-Zustand des Elektromotors hinweist;
    Bereitstellen (103) einer zweiten physikalischen Größe des Elektromotors, die auf einen Soll-Zustand des Elektromotors hinweist;
    Ermitteln (105) einer zu erwartenden ersten physikalischen Größe auf der Basis der zweiten physikalischen Größe und einer Kennlinie des Elektromotors, die die zu erwartende erste physikalische Größe mit der zweiten physikalischen Größe verknüpft; und
    Überprüfen (107) des Zustandes anhand eines Vergleichs zwischen der gemessenen ersten physikalischen Größe und der zu erwartenden ersten physikalischen Größe,
    **dadurch gekennzeichnet, dass** die gemessene erste physikalische Größe eine elektrische Leistung ist, insbesondere eine durch den Elektromotor aufgenommene oder durch eine elektrische Batterie bereitgestellte elektrische Leistung, wobei die zweite physikalische Größe ein Drehmoment des Elektromotors oder ein Querstrom, der für ein Drehmoment des Elektromotors ursächlich ist, oder eine von dem Drehmoment oder dem Querstrom abhängige Größe ist, und wobei die zu erwartende erste physikalische Größe die bei Vorliegen der zweiten physikalischen Größe zu erwartende elektrische Leistung ist.

2. Verfahren gemäß Anspruch 1, wobei die erste physikalische Größe und die zweite physikalische Größe unterschiedliche physikalische Größen sind oder unterschiedliche physikalische Einheiten aufweisen.

3. Verfahren gemäß einem der vorhergehenden Ansprüche, wobei die Kennlinie gemessene oder empirisch bestimmte oder repräsentative Kennlinienwerte aufweist.

4. Verfahren gemäß einem der vorhergehenden Ansprüche, wobei die Kennlinie ein dreidimensionales Kennlinienfeld ist, das die zu erwartende erste physikalische Größe, insbesondere eine Leistung, mit der zweiten physikalischen Größe, insbesondere einem Drehmoment des Elektromotors oder einem Querstrom, der für ein Drehmoment des Elektromotors ursächlich ist, oder einer von dem Drehmoment oder dem Querstrom abhängigen Größe, und einer dritten physikalische Größe, insbesondere einer Motordrehzahl, verknüpft.

5. Verfahren gemäß einem der vorhergehenden Ansprüche, wobei in dem Schritt des Überprüfens (107) die gemessene erste physikalische Größe mit der zu erwartenden ersten physikalischen Größe verglichen wird.

6. Verfahren gemäß einem der vorhergehenden Ansprüche, wobei der Elektromotor abgeschaltet wird, falls ein Unterschied zwischen der gemessenen ersten physikalischen Größe und der zu erwartenden ersten physikalischen Größe einen vorgegebenen Schwellwert überschreitet.

7. Verfahren gemäß einem der vorhergehenden Ansprüche, wobei der Zustand des Elektromotors auf der Basis der Kennlinie bis zu einer vorgebbaren Drehzahl des Elektromotors überprüft wird und wobei der Zustand des Elektromotors oberhalb der vorgebbaren Drehzahl auf der Basis eines Vergleichs der gemessenen ersten physikalischen Größe und der zu erwartenden ersten physikalischen Größe, insbesondere auf der Basis eines Vergleichs zwischen einem gemessenem Ist-Drehmoment und einem Soll-Drehmoment, das in Abhängigkeit von einer aufgenommenen oder abgegebenen elektrischen Leistung oder einer Drehzahl des Elektromotors berechnet wird, durchgeführt wird.

8. Verfahren gemäß einem der vorhergehenden Ansprüche, wobei ferner ein Drehmoment des Elektromotors und/oder eine Drehzahl des Elektromotors in Abhängigkeit des Vergleichs zwischen der gemessenen ersten physikalischen Größe und der zu erwartenden ersten physikalischen Größe insbesondere adaptiv eingestellt werden.

9. Programmtechnisch eingerichtete Vorrichtung, die ausgebildet ist, ein Computer-Programm zum Ausführen eines der Verfahren gemäß einem der Ansprüche 1 bis 8 auszuführen.

**Claims**

1. Method for checking a state of an electric motor, comprising:

    sensing (101) a measured first physical variable of the electric motor by means of a measurement, wherein the first physical variable indicates an actual state of the electric motor;
    making available (103) a second physical variable of the electric motor which indicates a setpoint state of the electric motor;
    determining (105) an expected first physical variable on the basis of the second physical variable and a characteristic curve of the electric motor which links the expected first physical variable to the second physical variable; and
    checking (107) the state on the basis of a comparison between the measured first physical variable and the expected first physical variable,

    **characterized in that** the measured first physical variable is an electrical power, in particular an electrical power which is taken up by the electric motor or made available by an electric battery, wherein the second physical variable is a torque of the electric motor or a quadrature current which is the cause of a torque of the electric motor, or a variable which is dependent on the torque or the quadrature current, and wherein the expected first physical variable is the electrical power which is expected when the second physical variable is present.

2. Method according to Claim 1, wherein the first physical variable and the second physical variable are different physical variables or have different physical units.

3. Method according to one of the preceding claims, wherein the characteristic curve has measured or empirically determined or representative characteristic curve values.

**4.** Method according to one of the preceding claims, wherein the characteristic curve is a three-dimensional characteristic curve field which links the expected first physical variable, in particular a power, to the second physical variable, in particular a torque of the electric motor or a quadrature current which is the cause of a torque of the electric motor, or to a variable which is dependent on the torque or the quadrature current, and a to a third physical variable, in particular an engine speed.

**5.** Method according to one of the preceding claims, wherein in the checking step (107) the measured first physical variable is compared with the expected first physical variable.

**6.** Method according to one of the preceding claims, wherein the electric motor is switched off if a difference between the measured first physical variable and the expected first physical variable exceeds a predefined threshold value.

**7.** Method according to one of the preceding claims, wherein the state of the electric motor is checked on the basis of the characteristic curve up to a predefinable rotational speed of the electric motor, and wherein the state of the electric motor is checked above the predefinable rotational speed on the basis of a comparison with the measured first physical variable and the expected first physical variable, in particular on the basis of a comparison between a measured actual torque and a setpoint torque which is calculated as a function of a recorded or output electrical power or a rotational speed of the electric motor.

**8.** Method according to one of the preceding claims, wherein in addition a torque of the electric motor and/or a rotational speed of the electric motor are/is set, in particular, adaptively as a function of the comparison between the measured first physical variable and the expected first physical variable.

**9.** Device which is configured by programming and is designed to execute a computer program for carrying out one of the methods according to one of Claims 1 to 8.

**Revendications**

**1.** Procédé pour vérifier un état d'un moteur électrique, comprenant:

l'acquisition (101) d'une première grandeur physique mesurée du moteur électrique par une mesure, la première grandeur physique renvoyant à un état réel du moteur électrique ;

la mise à disposition (103) d'une deuxième grandeur physique du moteur électrique, laquelle renvoie à un état de consigne du moteur électrique ;

la détermination (105) d'une première grandeur physique attendue en se basant sur la deuxième grandeur physique et une courbe caractéristique du moteur électrique qui combine la première grandeur physique attendue avec la deuxième grandeur physique ; et

la vérification (107) de l'état au moyen d'une comparaison entre la première grandeur physique mesurée et la première grandeur physique attendue,

**caractérisé en ce que**

la première grandeur physique mesurée est une puissance électrique, notamment une puissance électrique absorbée par le moteur électrique ou mise à disposition par une batterie électrique, la deuxième grandeur physique étant un couple du moteur électrique ou une composante transversale du courant qui est à l'origine d'un couple du moteur électrique, ou encore une grandeur dépendante du couple ou de la composante transversale du courant, et la première grandeur physique attendue étant la puissance électrique attendue en présence de la deuxième grandeur physique.

**2.** Procédé selon la revendication 1, selon lequel la première grandeur physique et la deuxième grandeur physique sont des grandeurs physiques différentes ou présentent des unités physiques différentes.

**3.** Procédé selon l'une des revendications précédentes, selon lequel la courbe caractéristique présente des valeurs de courbe caractéristique mesurées ou déterminées empiriquement ou représentatives.

**4.** Procédé selon l'une des revendications précédentes, selon lequel la courbe caractéristique est un diagramme caractéristique tridimensionnel qui combine la première grandeur physique attendue, notamment une puissance, avec la deuxième grandeur physique, notamment un couple du moteur électrique ou une composante transversale du courant qui est à l'origine d'un couple du moteur électrique, ou encore une grandeur dépendante du couple ou de la composante transversale du courant, avec une troisième grandeur physique, notamment une vitesse de rotation du moteur.

**5.** Procédé selon l'une des revendications précédentes, selon lequel, dans l'étape de vérification (107), la première grandeur physique mesurée est comparée avec la première grandeur physique attendue.

**6.** Procédé selon l'une des revendications précédentes, selon lequel le moteur électrique est déconnecté dans le cas où la différence entre la première grandeur physique mesurée et la première grandeur physique attendue dépasse une valeur de seuil prédéfinie.

7. Procédé selon l'une des revendications précédentes, selon lequel l'état du moteur électrique est vérifié en se basant sur la courbe caractéristique jusqu'à une vitesse de rotation du moteur électrique pouvant être prédéfinie et selon lequel l'état du moteur électrique au-dessus de la vitesse de rotation pouvant être prédéfinie est vérifié en se basant sur une comparaison de la première grandeur physique mesurée et de la première grandeur physique attendue, notamment en se basant sur une comparaison entre un couple réel mesuré et un couple de consigne, lequel est calculé en fonction d'une puissance électrique absorbée ou délivrée ou d'une vitesse de rotation du moteur électrique.

8. Procédé selon l'une des revendications précédentes, selon lequel un couple du moteur électrique et/ou une vitesse de rotation du moteur électrique est en outre réglé de manière adaptative en fonction de la comparaison entre la première grandeur physique mesurée et la première grandeur physique attendue.

9. Dispositif configuré par technique de programmation, lequel est réalisé pour exécuter un programme informatique destiné à mettre en oeuvre l'un des procédés selon l'une des revendications 1 à 8.

EP 2 281 336 B1

Fig. 1

9

Fig. 2

Fig. 3

Fig. 4

Fig. 5

Fig. 6

EP 2 281 336 B1

**EP 2 281 336 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006004280 A1
- US 5444340 A
- US 5592355 A
- JP 2004215328 A
- JP 2000166014 A